# EUROPEAN PATENT APPLICATION

(11) **EP 4 815 521 A1**
(43) Date of publication of application: **30.09.2026**
(21) Application number: 25382282.9
(22) Date of filing: 25.03.2025
(51) Int. Cl.: H04W 4/50, H04W 8/18, H04W 8/20

(54) **METHOD, CONFIGURATION PROGRAM, SERVER PROGRAM DATASET, DATA CARRIER, AS WELL AS USER DEVICE ADAPTED FOR PROFILE OPERATION OUTCOME PREDICTION ON A SERVER DEVICE, AND SAME**

(71) Applicant: Giesecke+Devrient Mobile Security Germany GmbH, 81677 München (DE)
(72) Inventor: ARBÓS, Noemi, 08820 El Prat de Llobregat, Barcelona (ES); ESPINOLA, Ernest, 08820 El Prat de Llobregat, Barcelona (ES); GONZALEZ, Gabriel, 08820 El Prat de Llobregat, Barcelona (ES); OTAÑON CARMONA, José Felix, 08820 El Prat de Llobregat, Barcelona (ES)
(74) Representative: LKGLOBAL Partnerschaftsgesellschaft mbB

(57) **Abstract**

A method, as well as a corresponding configuration program (10), a server program dataset (B), a computer-readable data carrier (11, 12, 13), a user device (5), and a server device (3) are provided, wherein for configuring a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), the method comprises the steps of providing a database (D) containing an administered set (M) of user profile datasets (P); defining at least one connectivity parameter (C) relating to each user device (5) associated to a user profile (P) contained in the administered set (M); and predicting an outcome of a profile operation (Q) to be remotely carried out with the user pro-file datasets (P) contained in the administered set (M) based on the at least one connectivity parameter (C).

## Description

### Technical Field

The present disclosure relates to the field of configuring server devices and user devices, for example, smart cards, transaction cards, personal mobile devices or Internet-of-Things (IoT) devices, or alike, for managing remotely triggered profile operations involving user profile datasets stored in secure elements of user devices and configured to identify respective users for allowing their participation in communication networks. In particular, the present disclosure relates to a method of configuring a server device, in particular a security server providing a secure location for handling user profile datasets adapted to be stored on a secure element, such as an eUICC, of a user device associated to a user and configured to identify the respective user to allow participation in mobile telecommunication networks, a configuration program for a configuration system, a server program dataset for operating a server device, in particular a security server providing a secure location for handling user profile datasets adapted to be stored on a secure element, a computer-readable data carrier, a server device, in particular a security server providing a secure location for handling user profiles for communication via mobile telecommunication networks, a user device, in particular a mobile device or an IoT device to be configured for communication via mobile telecommunication networks by a user.

### Background of the Invention

User devices, such as personal mobile devices or IoT-devices, as well as smart cards (e.g., so-called java cards), identification cards, transaction cards, etc., are known from the prior art. The user devices are commonly configured to employ electronic subscriber profiles authenticating a user for secure transactions or communicating on telecommunication networks, e.g., mobile networks. Therefore, user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles, in the form of respective user profile datasets, that may allow the user devices to connect to one or more mobile networks.

A subscriber profile (e.g., an eSIM profile) may be generated by a mobile network operator (MNO) on a server device, and may be stored, e.g., downloaded from there by a user device. The subscriber profile, or respective user profile dataset, may then be installed on a secure element of the user device and used for communication over a corresponding mobile network by the user device in that they allow for securely identifying the user. Certain ways for remotely managing user profile datasets on secure elements are known from the prior art.

WO 2022/017645 A1, for example, refers to a method for updating a software in vehicles of a vehicle fleet, wherein at least one vehicle of the vehicle fleet is identified, the software of which vehicle is to be updated, and the software of the vehicle identified is then updated via a radio connection in accordance with predefined updating conditions. The updating conditions are determined in such a manner that a machine learning model, which models transmission qualities (Q) of radio connections, predicts a sufficient transmission quality for the radio connection in order to update the software of the at least one vehicle.

US 2021/218825 A1describes a computer-implemented system and method for Over-The-Air (OTA) delivery of firmware to devices enabled for connectivity using static and dynamic information about the devices are disclosed. The computer-implemented method for Over The Air delivery of firmware to devices enabled for connectivity using static and dynamic information about the devices comprises receiving static device information for the one or more devices; receiving dynamic device information for the one or more devices; dynamically grouping the one or more devices based on the static device information, the dynamic device information or the combination thereof; and dynamically scheduling Over The Air delivery of firmware using the grouping to the one or more devices enabled for connectivity.

US 10 841 791 B1 relates to a system that may receive a request to schedule a wireless update for one or more user devices. The system may schedule transmission of the wireless update to the one or more user devices based on profiles associated with the one or more user devices and network load information associated with base stations associated with the one or more user devices. The profiles associated with the one or more user devices include, for each user device, a location history associated with the user device. The system may transmit the wireless update to the one or more user devices based on the scheduled transmission. The system may further schedule installation of the wireless update on the one or more user devices based on the profiles associated with the one or more user devices and send, to the one or more user devices, an indication to install the wireless update based on the scheduled installation.

Methods for configuring user devices, as described above, may not fully satisfy all requirements regarding profile management, in particular, when in the field, i.e., after commencing operation of respective user devices provided with the secure elements, certain profile operations are supposed to be carried out, such as downloads, updates, installations, deletions, disablement, enablement, etc. A server device, such as a profile server, for example an SM-DP+ or SM-SR, may attempt to carry out such operations but is unaware of the operability of the user device and/or the respective secure element intended to perform the profile operation. The attempt may be futile if the user device, secure element and/or a user profile dataset running thereon are not available, operable or in condition to carry out the profile operation. Repeatedly attempting these futile operations may in turn lead to undesired workloads on the side of the server device and respective communication networks.

### Summary of the Invention

It may be seen as an object to improve the interaction between the user devices and/or their secure elements when dealing with vast numbers of user profiles managed by respective server devices. In particular, it may be seen as an object to provide a way to remotely carry out profile operations, such that on the one hand, convenient operation, versatility, and availability, as well as on the other hand, sufficient functional capacity, safety, and security of the involved servers and user devices can be provided in a satisfactory manner. These objects are at least partly achieved by the subject-matter of the independent claims.

According to an aspect, a method of configuring a server device, in particular a security server providing a secure location for handling user profile datasets adapted to be stored on a secure element, such as an eUICC, of a user device associated to a user and configured to identify the respective user to allow participation in mobile telecommunication networks, is provided, the method comprising the steps of providing a database containing an administered set of user profile datasets; defining at least one connectivity parameter relating to each user device associated to a user profile contained in the administered set; and predicting an outcome of a profile operation to be remotely carried out with the user profile datasets contained in the administered set based on the at least one connectivity parameter.

According to an aspect, a configuration program for a communication system involving user profile datasets adapted to be stored on a secure element, such as an eUICC, of a user device associated to a user and configured to identify the respective user to enable access mobile telecommunication networks, is provided, wherein the configuration program comprises instructions which, when the configuration program is executed by a server device, a user device, and/or a secure element, cause the server device, the user device, and/or the secure element to carry out a corresponding method.

According to an aspect, a server program dataset for operating a server device, in particular a security server providing a secure location for handling user profile datasets adapted to be stored on a secure element, such as an eUICC, of a user device associated to a user and configured to identify the respective user to allow participation in mobile telecommunication networks, is provided, wherein the server program dataset is configured to cause the server device to carry out a corresponding method and/or is configured with a corresponding configuration program.

According to an aspect, a computer-readable data carrier is provided, having stored thereon a corresponding configuration program and/or a corresponding server program dataset.

According to an aspect, a server device, in particular a security server providing a secure location for handling user profiles for communication via mobile telecommunication networks, is provided, wherein the server device is configured to carry out a corresponding method, comprises a corresponding configuration program, a corresponding server program dataset and/or a corresponding computer-readable data carrier.

According to an aspect, a user device, in particular a mobile device or an IoT device to be configured for communication via mobile telecommunication networks by a user, wherein the user device is configured to carry out a corresponding method, comprises a corresponding configuration program, a corresponding application program dataset and/or a corresponding computer-readable data carrier.

Each user profile dataset can be installed on a respective secure element and may include security credentials configured for accessing at least one mobile telecommunication network. Further user profile datasets can be provided for accessing the at least one further mobile telecommunication networks. User profile datasets can comprise respective diversified data configured for accessing the at least one mobile telecommunication network and the at least one further mobile communication network.

The server program dataset may at least in part be provided on the server device and can be configured to interact with the server device and/or at least one hardware security module (HSM) thereof. In other words, the server program dataset may at least partly run on the server device, for example, as a part of a server system dataset configured to operate the server device. Additionally, an administration program dataset can be provided for installing and/or managing the server program dataset, such as for installing and/or updating the server program dataset or respective update data subsets, including the database. Both, the administration program dataset and the server program dataset may be integrated as data subsets into a customer specific dataset, such as a software suite allowing for customization of data on the server device as described herein.

The application program dataset may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, the installation program dataset and the installation program dataset may be integrated as data subsets into a customization dataset, such as a firmware suite allowing for customization of data on the secure element as described herein.

The application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for generally improving the interaction between the user devices, their secure elements and/or server devices in managing user profiles. In particular, a probable availability of user profile datasets can be predicted in set-ups involving large numbers of user profiles, for example, by means of machine learning algorithms applied to based on the connectivity parameters of the user devices, such that on the one hand, convenient operation, versatility, and availability, as well as on the other hand, sufficient functional capacity, safety, and security of the involved servers and user devices can be provided in a satisfactory manner. Moreover, the proposed solution allows to forecast a completion of intended profile operations. The proposed solution thus has the advantage over the prior art, that it provides way to efficiently handle databases and/or secure elements containing respective user profile datasets in a plan-nable and well-organized manner.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment of a method, the at least one connectivity parameter comprises an availability related time value of the user devices. The time value may reflect time points and/or time span, where the user devices have been recorded to be available such that they may be capable of enabling and/or carrying out the profile operation. Availability times can be predicted based on the recorded time value(s). This further helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the at least one connectivity parameter comprises a device value of the user devices. The device value may reflect device and/or secure element capabilities, such as connectivity capabilities, processing capabilities, storage capabilities, software capabilities, compatibilities, or alike, which may affect the outcome of an intended profile operation. This further helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the at least one connectivity parameter comprises a location value of the user devices. For example, certain profile operations may preferably carried out in a home network and/or primary network of the user device are secure element, such as private network of a company, corporation, government organisation, or alike, and/or a public network of a certain country or operator. On the other hand, some profile operations may not be possible in certain networks, such as foreign networks, or alike, under roaming conditions. The location value can thus help in predicting success of the intended profile operation based on the location of the user device. This further helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step further comprises the step of generating a parameter history of the at least one connectivity parameter associated to a user profile contained in the administered set. The parameter history can involve any desired or required number of connectivity parameters belonging to the user devices. In particular machine learning algorithms can use the parameter history to assess patterns in the connectivity parameters and predict an outcome of a profile operation. This additionally helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step further comprises the step carrying out at least one profile operation with at least one user dataset based on the predicted outcome. For example, a probability of the outcome of the at least one profile operation may be calculated, in particular, with the help of machine learning algorithms. If the probability exceeds a certain probability threshold, the at least one proper operation may be carried out. In predicting the outcome, besides the connectivity parameters, numerous parameters relating to the profile operation may be considered, such as data connection qualities, including bandwidth, download times, processing times, rebooting times, etc. This additionally helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step further comprises the step of building a batch knowledge dataset containing connectivity parameters relating to a group of user profile datasets. The group of user profile datasets may be a subset and/or batch of user profile datasets with certain characteristics, such as software versions, customers, users, locations, device types, secure element types, etc. The batch knowledge database may particularly comprise connectivity parameters belonging to such a batch of user profile datasets and respective user devices and/or secure elements. This additionally helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step further comprises the step of carrying out a batch update with a batch of user profile datasets based on the predicted outcome. For example, an outcome of at least one profile operation carried out with a batch of user profile datasets can be predicted. This additionally helps in predicting a success of profile operations in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step further comprises the step of modelling a digital twin structure of a network structure comprising user devices associated to a user profile contained in the administered set. The digital twin structure may replicate an entire network chain or at least sections thereof in order to simulate connectivity parameters, including device capabilities and states. An entire system involving server devices, user devices, secure elements and/or network components may be modelled. This further helps in enabling a Machine Learning Algorithm to predict a most promising time frame for carrying out profile operations.

According to an embodiment of a method, the step further comprises the step of triggering the server device to remotely carry out at least one profile operation with the user profile datasets contained in the administered set if a success rate calculated based on the at least one connectivity parameter is equal to or exceeds a pre-defined probability threshold. The profile operations may be particularly carried out as OTA operations. A database scan may be performed with the server device to identify a subset of user profile dataset of the administered set of user profiles datasets having a predicted success rate for the at least one profile operation. At least one of the user profile datasets and/or a profile identifier thereof may be added to an operation list of user profile datasets scheduled for the profile operation. A time interval for performing the database scan may be implemented. For example, an IMEI, ISD-P-AID and/or EID may be used on the side of the user device and/or secure element and/or an ICCID may be used on the side of the server device as respective profile identifier. This further helps in handling databases and/or secure elements containing respective user profile datasets in an efficient and well-organized manner.

### Brief Description of the Drawings

- Fig. 1: is a schematic exemplary illustration of a communication system configured for carrying out a method according to the present invention.
- Fig. 2: is a schematic exemplary illustration of a geographical distribution of components of the communication system shown in Fig. 1.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

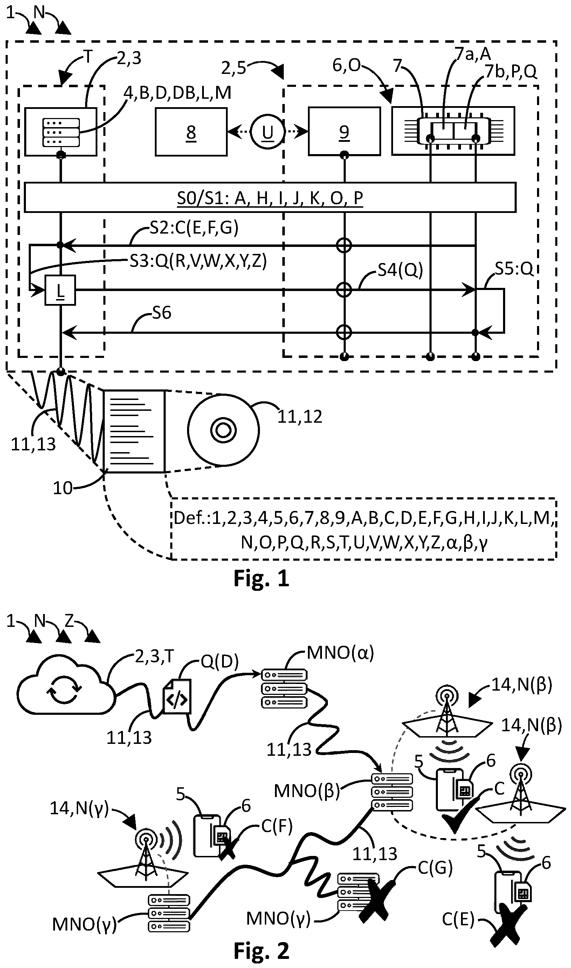

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program dataset A, operating system datasets O and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

The server device 3 and/or the hardware security module 4 may be operated by means of a respective server program dataset B which may involve routine server processes. A database DB containing an administered set M of user profile datasets P can be administered by means of the server device 3 and/or the hardware security module 4. The administered set M of user profile datasets P can be any set of user profile datasets P that is being managed by the respective trusted entity T or at least a part of the entirety of managers a proper datasets P, for example, specific user proper datasets P intended for a certain application, customer, mobile communication network N, and/or mobile network operator MNO.

In the present example, the user devices 5 may be adapted for secure operation, transactions and/or communication, e.g., via a mobile telecommunication networks N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a and at least one second memory region 7b.

The at least one user profile dataset P is associated to a respective user U, can be configured according to respective diversified data, such as security credentials H, a profile identifier I, authentication certificates H, and/or security keys to allow access at least one mobile telecommunication network N and/or a data object D. The at least one user profile P, diversified data, and/or data object can have a predefined data format as required for participating in the mobile telecommunication networks N, and can be stored in respective memory regions 7a, 7b of the secure storage location 7. By accessing the telecommunication networks N, the user may be provided with respective network services and access to data objects D. For example, a mobile telecommunication network N may be a public network (PN). Further mobile telecommunication networks N may be a non-public network (NPN), such as a private network of a certain government, non-government institution, e.g., schools, colleges, government agencies, departments, and universities, or alike, and since our private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer any data objects D, e.g., data packages, such as eUICC Packages, for instance to carry out Profile State Management and eIM configuration tasks by means of the eIM. The communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with an application program dataset A, the at least one user profile P and/or security credentials H, including profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the server program dataset B, the security credentials H, the diversified data, the at least one profile dataset P, the operating system dataset O, the profile identifiers I, and/or the authentication certificates J, the security keys K, and/or any component thereof. The authentication certificates J may be any kind of electronic certificate, for example, that can be issued by the trusted entity T, for authenticating an origin of the user devices 5, the secure elements 6, the secure storage location 7, the application program dataset A, the server program dataset B, the security credentials H, the diversified data, the security keys K, the operating system dataset O, the at least one user profile P the profile identifiers I, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the security system 1, any of the components thereof and/or any steps S carried out thereby, can be defined in and/or by the configuration program 10.

For carrying out the steps S, the configuration program 10 may provide and/or define respective connectivity parameters C which can be configured to reflect connectivity related information regarding the user devices 5, the secure elements 6, the secure storage location 7, the application program dataset A, the security credentials H, the diversified data, the operating system dataset O, the at least one profile dataset P, the profile identifiers I, the mobile telecommunication networks N and/or any component thereof. Transmission lines (not shown) may be provided for handling and/or transferring any of the above data components and/or data objects D, for example, via mobile telecommunication networks N as parts thereof or elements connected thereto. Therefore, the mobile telecommunication networks N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components for carrying out any of the steps S as described herein.

In a first step S1, the server device 3 may provide any of the data components of the configuration system 1, including the operating system dataset O, possibly along with the application program dataset A, respective diversified data, such as security credentials H and/or at least one user profile P associated with the user U, to the secure element 6 of the user device 5, for example through the communication interface 9 to be stored in the secure storage location 7 for deployment to the user U. The at least one user profile P may be created based upon respective diversified data kept in the database DB for the respective user U. In particular, certain security credentials H may have a high or even the highest security level conceivable for the secure element 6. Any of these components may be provided to enable access to data objects D, such as electronic load files (ELF), data blobs, or alike.

In the present example, the data provision in step 1 can be associated with a pre-issuance condition of the user device 5 and/or the secure element 6. Any of the steps taking place after the activation process in step 2 can be associated with a post-issuance condition of the user device 5 and/or the secure element 6. Providing an installation program dataset to the user device 5 and/or the secure element 6 can therefore be regarded as a zeroth step S0 which may take place in a factory and/or manufacturing facility before the first step S1 of providing data to the user device 5 and/or the secure element 6. For example, the application program dataset A may be installed in the first memory region 7a, and the user profile dataset P may be installed and the second memory region 7b.

In a second step S2, the user device 5, secure element 6, and/or at least one user profile data set P may provide connectivity parameters C to the server device 3, for example, via the mobile telecommunication network N. The connectivity parameters C can comprise time values E, device values F and/or location values G. In a third step S3, the server program dataset B may be provided with the connectivity parameters C and can then predict an outcome of profile operation Q to be remotely carried out with respect to the user devices 5, secure elements 6, and/or user profile data sets P contained in the administered set M, are a subset V or batch W thereof.

The profile operation Q may involve downloads, updates, installations, deletions, disablement, enablement, etc., and can be carried out by exchanging respective data objects D between the server device 3, the user device 5 and/or the secure element 6. In calculating a success rate R of the profile operation Q, threshold values X may be defined for the connectivity parameters C and/or for predicting the outcome of the profile operation Q. Batch knowledge datasets Y may be defined comprising a batch or group, such as the subset V and/or batch W, respectively. A digital twin Z of the communication system 1 and its components may be generated. Based on the predicted outcome, success rate R and/or intended profile operation Q, an operational list L may be generated to schedule profile operations Q.

In a fourth step S4, at least one profile operation Q may be triggered by the server device 3, for example, based on the operational list L. In a fifth step S5, if the respective user device 5, secure element 6 and/or user profile dataset P, a subset V or batch W thereof, may carry out the profile operation Q, if able to do so. In a sixth step, successful implementation and/or failure of the Q respective profile operation may be reported back to the server device 3, possibly triggering another step of calculating success rates R based on the respective feedback from user device 5 and/or secure elements 6.

Fig. 2 shows a schematic exemplary illustration of a geographical distribution of components of the communication system 1 shown in Fig. 1. For example, the communication system 1 may involve a number of mobile network operators MNO providing respective network components 14, such as transmission lines, radio towers, transceivers, repeaters, or alike. The mobile network operators MNO and/or network components 14 may be categorised as primary α, secondary β, tertiary γ.

A primary α mobile network operator MNO and/or network component 14 can be regarded as having a first priority and/or being a main provider and/or receiver of a network service, such as, for example, a direct customer of the trusted entity T. A secondary β mobile network operator MNO and/or network component 14 can be regarded as having a second priority and/or being an auxiliary provider and/or receiver of a network service, such as, for example, a cooperation partner of the primary α mobile network operator MNO and/or network component 14. A tertiary γ mobile network operator MNO and/or network component 14 can be regarded as having a third priority and/or being an additional auxiliary provider and/or receiver of a network service, such as, for example, a cooperation partner of the primary α and/or secondary β mobile network operator MNO and/or network component 14.

In the present exemplary embodiment, a number of user devices 5 with respective secure elements 6 can be arranged in the communication system 1 with their respective connectivity parameters C. For example, a data object D is to be provided from the trusted entity T and/or primary α mobile network operator MNO to the mobile devices 5 and/or secure elements 6 in the course of the profile operation Q. While a number of respective user devices 5 as such secure elements 6 can be capable of carrying out the profile operation Q as a are reachable through a secondary β mobile network operator MNO and/or network components 14, other mobile devices 5 and/or secure elements 6 may not be available for carrying out the profile operation Q due to issues with the time value E, for example, in that they are disabled over a certain amount of time.

Furthermore, a number of user devices 5 and/or secure elements 6 may not be able to carry out the profile operation Q due to issues with a device value F, such as, a functional failure, incompatibility, or alike. In addition to that, a number of mobile devices 5 and/or secure elements 6 may not be able to carry out the profile operation Q due to issues with a location value G, such as that they are operating in a roaming environment, which may be provided by a tertiary γ mobile network operator MNO and/or network component 14. A respective digital twin structure Z of the communication system 1 and/or mobile communication network N may be generated by the server device 3 and/or server program dataset B in order to calculate possible success rates R of the profile operations Q, for example, involving machine learning algorithms.

The digital twin structure Z may be combined with a machine learning algorithm, such as an artificial intelligence (AI) optimizer, implemented using a Reinforcement Learning (RL) approach. The digital twin structure Z can replicate the entire network chain and simulates device capabilities and states, which can be represented and/or calculated by means of the connectivity parameters C. The digital twin structure Z can act as a virtual environment that mirrors the real-world conditions under which profile operations Q, such as SIM OTA updates, or alike, are performed. It ensures that the data used for training models to predict success rates R is as close to reality as possible by incorporating historical connectivity events and transactional events relating to the user devices 5 and/or secure elements 6 and/or user profile datasets.

The AI Optimizer can be implemented as a reinforcement learning agent trained to maximize the success rate R of OTA campaigns with the following exemplary training architecture:
- Reinforcement Learning (RL): The AI optimizer operates within the digital twin environment, continuously learning and improving its strategies.
- User-Defined Campaign input: The user initiates the process by defining an OTA campaign.
- Proposed Optimized Campaign: The AI optimizer evaluates this input and proposes an optimized campaign aimed at achieving a higher success rate.
- Reward Mechanism: The reward for the AI optimizer is determined by the output of the digital twin, which simulates the success of the campaign based on historical data and the simulated environment.
- Iteration and Improvement: Through multiple iterations, the RL agent refines its strategies, learning from both successful and unsuccessful campaigns to improve future predictions.
- Validation: The model's predictions are validated against real-world outcomes to ensure reliability and accuracy.

This exemplary architecture not only allows for dynamic prediction and optimization of OTA campaign success but also differentiates our solution from existing methods by being device independent and leveraging existing metadata without requiring additional device implementations. For example, the architecture is capable of predicting the success of OTA updates for SIM cards, which is a technical domain. The architecture can be applied to SIM card OTA updates and involves digesting the connectivity parameters C, for example, as cloud-based information (network registration patterns, GSM module characteristics, etc.). Hence, the present architecture provides a device agnostic approach.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: communication system
- 2: computing device
- 3: server device
- 4: hardware security module
- 5: user device
- 6: secure element
- 7: secure storage location
- 7a: first memory region
- 7b: second memory region
- 8: remote management application
- 9: communication interface / modem
- 10: configuration program
- 11: computer-readable data carrier
- 12: computer-readable medium
- 13: data carrier signal
- 14: network component
- c: status count value
- d: deletion time
- h: current time
- i: installation time point /time stamp
- n: count number
- r: instruction loop/repetition
- s: time span
- t: time value
- u: last usage time point
- v: time interval
- A: application program dataset
- B: server program dataset / routine server process
- C: connectivity parameter / status
- D: data object
- DB: data base
- E: time value / times of enabled state
- F: device value / function
- G: location value / geographic coordinates, network coordinates
- H: security credentials
- I: profile identifier
- J: authentication certificate
- K: security key
- L: operation list
- M: administered set
- MNO: mobile network operator
- N: mobile telecommunication network
- O: operating system dataset
- P: user profile
- Q: profile operation
- R: success rate
- S: step
- T: trusted entity
- U: user
- V: subset of user profiles
- W: batch
- X: threshold value
- Y: batch knowledge dataset
- Z: digital twin structure
- α: primary / first / main
- β: secondary / further / auxiliary
- γ: tertiary / additional / auxiliary
- S0: initialisation
- S1: provide data
- S2: gather connectivity parameters
- S3: server calculations
- S4: trigger operations
- S5: carry out operations
- S6: provide feedback

## Claims

1. Method of configuring a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), the method comprising the steps of
providing a database (D) containing an administered set (M) of user profile datasets (P);
defining at least one connectivity parameter (C) relating to each user device (5) associated to a user profile (P) contained in the administered set (M); and
predicting an outcome of a profile operation (Q) to be remotely carried out with the user profile datasets (P) contained in the administered set (M) based on the at least one connectivity parameter (C).

2. Method according to claim 1, wherein the at least one connectivity parameter (C) comprises an availability related time value (E) of the user devices (5).

3. Method according to claim 1 or 2, wherein the at least one connectivity parameter (C) comprises a device value (F) of the user devices (5).

4. Method according to at least one of claims 1 to 3, wherein the at least one connectivity parameter (C) comprises a location value (G) of the user devices (5).

5. Method according to at least one of claims 1 to 4, further comprising the step of generating a parameter history of the at least one connectivity parameter (C) associated to a user profile (P) contained in the administered set (M).

6. Method according to at least one of claims 1 to 5, further comprising the step carrying out at least one profile operation (Q) with at least one user dataset (P) based on the predicted outcome.

7. The method according to at least one of claims 1 to 6, further comprising the step of building a batch knowledge dataset (Y) containing connectivity parameters (C) relating to a group of user profile datasets (P).

8. Method according at least one of claims 1 to 7, further comprising the step of carrying out a batch update with a batch of user profile datasets (P) based on the predicted outcome.

9. Method according at least one of claims 1 to 8, further comprising the step of modelling a digital twin structure (Z) of a network structure comprising user devices (5) associated to a user profile (P) contained in the administered set (M).

10. Method according to at least one of claims 1 to 9, further comprising the step of triggering the server device (3) to remotely carry out at least one profile operation (Q) with the user profile datasets (P) contained in the administered set (N) if a success rate (R) calculated based on the at least one connectivity parameter (C) is equal to or exceeds a pre-defined probability threshold (X).

11. Configuration program (10) for a communication system (1) involving user profile datasets (P) adapted to be stored on a secure element (6), such as an eUICC, of a user device (5) associated to a user (U) and configured to identify the respective user (U) to enable access mobile telecommunication networks (N), wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Server program dataset (B) for operating a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), wherein the server program dataset (A) is configured to cause the server device (3) to carry out a method according to at least one of claims 1 to 10 and/or is configured with a configuration program (10) according to claim 11.

13. Computer-readable data carrier (11, 12, 13) having stored thereon a configuration program (10) according to claim 11 and/or a server program dataset (A) according to claim 12.

14. Server device (3), in particular a security server providing a secure location for handling user profiles (P) for communication via mobile telecommunication networks (N), wherein the server device (4) is configured to carry out a method according to at least one of claims 1 to 10, comprises a configuration program (10) according to claim 11, a corresponding server program dataset (B) according to claim 12 and/or a computer-readable data carrier (11, 12, 13) according to claim 13.

15. User device (5), in particular a mobile device or an IoT device to be configured for communication via mobile telecommunication networks (N) by a user (U), wherein the user device (5) is configured to carry out a method according to at least one of claims 1 to 10, comprises a configuration program (10) according to claim 11, a corresponding application program dataset (A) and/or a computer-readable data carrier (11, 12, 13) according to claim 13.
